# EUROPEAN PATENT APPLICATION

(11) **EP 1 739 808 A2**
(43) Date of publication of application: **03.01.2007**
(21) Application number: 06253388.0
(22) Date of filing: 29.06.2006
(51) Int. Cl.: H02K 1/27

(54) **System and method for protecting magnetic elements of an electrical machine from demagnetization**

(30) Priority: 30.06.2005 US 172767
(71) Applicant: GENERAL ELECTRIC COMPANY, Schenectady, New York 12345 (US)
(72) Inventor: Jansen, Patrick Lee, Scotia New York 12302 (US); Carl, Ralph James, Jr., Clifton Park New York 12065 (US); Qu, Ronghai, Clifton Park New York 12065 (US)
(74) Representative: Bedford, Grant Richard

(57) **Abstract**

In accordance with one embodiment, the present technique provides a magnetic assembly (20) for an electrical machine having a rotor core (18). The magnetic assembly includes a magnetic element (40) having a top surface (52), a bottom surface and at least one side surface (44) located between the top and bottom surfaces, wherein the bottom surface of the magnetic element is couplable to a peripheral surface of the rotor core. The magnetic assembly also includes a ferromagnetic layer disposed on the top surface of the magnetic element. The magnetic assembly further includes an electrically conductive element (42) at least partially circumscribe the at least one side surface of the magnetic element.

## Description

The present invention relates generally to magnetic elements formed from permanent magnet materials in electrical machines and, more specifically to systems and methods for protecting these elements from demagnetization, such as large electric machines with high pole counts and low rated frequencies.

Electrical machines, such as motors and generators, often include a rotor disposed within a stator. In the case of synchronous permanent magnet motors or generators, these rotors generally include magnetic elements mounted thereto. These magnetic elements facilitate the conversion of electrical energy to kinetic energy and vice-versa. For example, in generators, the kinetic energy of the rotor's rotation is converted into electrical energy by inducing electric voltage and current in the stator windings. During fault conditions, such as short circuits, the magnetic elements in the rotor are subjected to strong demagnetization fields. That is, fault conditions often generate magnetic fields opposite to the magnetic fields produced by the magnet elements. Unfortunately, these newly generated magnetic fields tend to demagnetize the magnetic elements, for instance. Particularly, the edges of the magnetic elements are susceptible to a decrease in the component of the magnetic flux parallel to the magnetization direction of the magnet (typically the radial direction) and as such, a loss of magnetization. Indeed, decrease in magnetic flux beyond a certain level can cause irreversible demagnetization of the magnetic elements. Irreversible demagnetization results in reduced power and torque capability of the electrical machine and can require disassembly and remagnetization to restore the electrical machine to its original condition. Thus, irreversible demagnetization increases the downtime of the electrical machine as well as the adding the cost of the remagnetization. In summary, irreversible demagnetization is generally an undesirable event.

In the past, demagnetization protection has been provided by circumferentially surrounding the rotor with an electrically conductive, non-ferromagnetic material, such as an alloy containing copper or aluminum. This overlaying shield facilitates the production of a magnetic field in opposition to the fault producing magnetic field, thereby protecting the magnetic elements from demagnetization. To be effective the thickness of the shield is on the order of a skin depth at rated frequency. Thus for low frequency machines (e.g., <15Hz), the shield may be unacceptably thick. Unfortunately, these traditional shields increase the effective air gap distance between magnetic elements and the stator windings, since they are non-ferromagnetic. In other words, magnetic flux from the magnetic elements does not well travel through the non-magnetic shield, reducing the overall performance capability of the electrical machine. Indeed, these traditional shields require an increase in the magnet thickness (i.e., length along the magnetization axis), overall magnet mass and, as such, cost for achieving a desired air gap flux density and machine performance, for example.

Another traditional method for mitigating the risk of demagnetization during a short circuit has been to design the magnetic elements with relatively large thickness so the magnet operates on a steep load line and at a high flux density state. Unfortunately, this results in excessive magnet material mass and, as such, cost. Hence, this option, though widely adopted, is often costly, and not desired for cost sensitive applications.

Thus, there exists a need for improved systems and methods for providing demagnetization protection to the magnetic elements in electrical machines, especially machines with many poles that operate at typical power generation frequencies (i.e., 60Hz or less).

Briefly, in accordance with one embodiment, the present technique provides a magnetic assembly for an electrical machine having a rotor core. The magnetic assembly includes a magnetic element having a top surface, a bottom surface and at least one side surface located between the top and bottom surfaces, wherein the bottom surface of the magnetic element is couplable to a peripheral surface of the rotor core. The magnetic assembly also includes a ferromagnetic layer disposed on the top surface of the magnetic element. The magnetic assembly further includes an electrically conductive element that circumscribes magnetic element.

In accordance with one aspect of the present technique, a method of manufacturing a magnetic assembly for a rotor assembly of an electrical machine is provided. The method includes providing a magnetic element having a top surface, a bottom surface and at least one side surface extending between the top and bottom surfaces. The method includes disposing a ferromagnetic layer over the top surface of the magnetic element. The method further includes disposing an electrically conductive element that circumscribes the magnetic element

Various features, aspects, and advantages of the present invention will become better understood when the following detailed description is read with reference to the accompanying drawings in which like characters represent like parts throughout the drawings, wherein:
FIG. 1 is a partial, perspective view of a rotor assembly for an electrical machine, in accordance with an exemplary embodiment of the present technique;
FIG. 2 is an exploded, perspective view of a magnetic assembly, in accordance with an exemplary embodiment of the present technique;
FIG. 3 is a partial sectional view of an electrical machine having a stator and rotor, with a fractional number of poles per slot per phase;
FIG. 4A is a three pole flux diagram indicating a manner in which the flux lines are distributed in a magnet assembly at the instant of peak short circuit fault current as implemented in prior art;
FIG. 4B is a three pole flux diagram indicating a manner in which the flux lines are distributed in magnet assembly at the instant of peak short circuit fault current according to an embodiment of the present invention;
FIG. 5A is a graph illustrating the radial component (the magnet is magnetized in the radial direction) of the magnet flux density along the surface of the magnets, with the three pole flux diagram in FIG. 4A commencing at 360 electrical degrees
FIG. 5B is a graph illustrating the radial component of the magnetic flux density along the surface of the magnets with the three pole flux diagram in FIG. 4B commencing at 360 electrical degrees, in accordance with one embodiment of the present invention;
FIG. 6 is an exploded, perspective view of another rotor assembly for an electrical machine, in accordance with an exemplary embodiment of the present technique;
FIG. 7 is a front cross-section of a magnetic assembly with electrically conductive rings imbedded inside a pole-cap, in accordance with an embodiment of the present technique;
FIG. 8 is a front cross-section of another magnetic assembly with electrically conductive rings imbedded inside a pole-cap, in accordance with an embodiment of the present technique; and
FIG. 9 is a flowchart illustrating an exemplary method of manufacturing of a rotor assembly for an electrical machine, in accordance with aspects of present technique.

As a preliminary matter, the definition of the term "or" for the purpose of the following discussion and the appended claims is intended to be an inclusive "or." That is, the term "or" is not intended to differentiate between two mutually exclusive alternatives. Rather, the term "or" when employed as a conjunction between two elements is defined as including one element by itself, the other element itself, and combinations and permutations of the elements. For example, a discussion or recitation employing the terminology "A" or "B" includes: "A", by itself "B" by itself and any combination thereof, such as "AB" and/or "BA."

The present technique is generally directed towards protecting magnetic elements from demagnetizing factors that often occur in electrical machines. However, it is worth noting that the present technique provides many benefits, and it should not be limited to the embodiments described herein. Indeed, magnetic elements, exemplary embodiments of which are discussed further below, are used in many applications, such as motors, generators, to name but few applications.

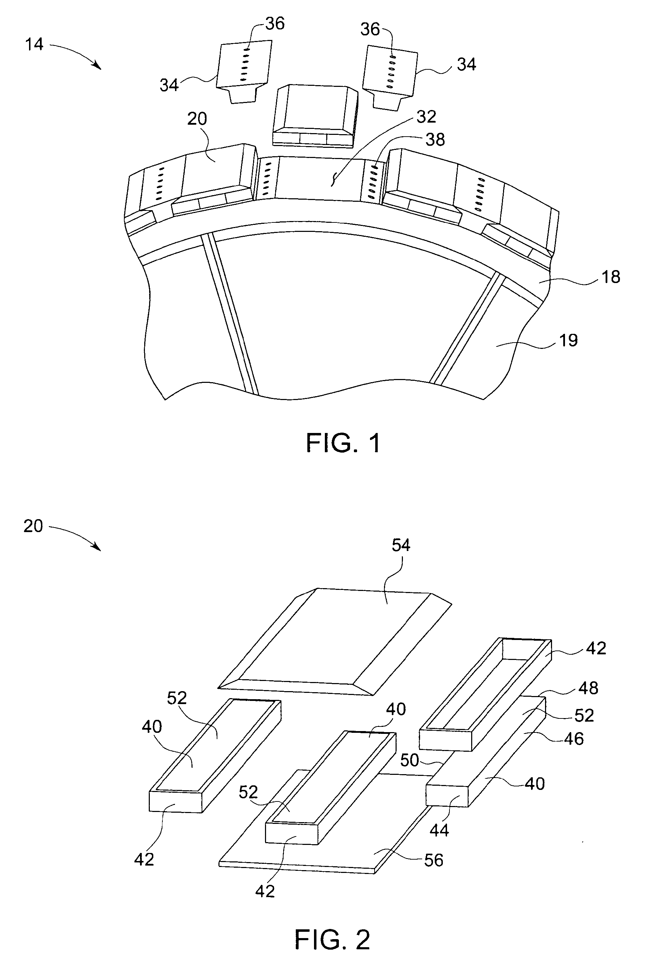

FIG. 1 is a partial, perspective view of the rotor assembly 14, in accordance with an exemplary embodiment of the present technique. The exemplary rotor assembly 14 includes a rotor core 18 with a rotor frame 19. The outer peripheral surface 32 of the rotor core 18 carries a series of magnetic assemblies 20 that circumferentially surround the rotor core 18. These magnetic assemblies 20 are secured to the rotor core with wedges 34, which are formed of a non-ferromagnetic material such as aramid fiber. Of course, the wedges 34 may be formed of any suitable material. The wedges 34 include mounting holes 36 that align with mounting holes 38 in the rotor core 18 when assembled. Either holes 36 or 38 can be tapped with screw threads or augmented with screw thread inserts to provide mounting of the magnetic assemblies to the rotor core 18 via mounting bolts. Indeed, the wedges 34 and the magnetic assemblies may have correspondingly profiled surfaces for a good fit there between.

FIG. 2 is an exploded, perspective view of the magnetic assembly 20, in accordance with an exemplary embodiment of the present technique. The magnetic assembly 20 includes magnetic elements 40, which, as described above, generate magnetic flux. Typically, the magnetic elements 40 may be formed by subjecting a magnetically hard material to a strong magnetic field, causing the magnetic material to retain its magnetic field producing properties, thus becoming what is commonly referred to as a permanent magnet. However, as described above, magnetic fields that are produced by the armature currents in opposition to the magnetic field of the magnetic elements tend to demagnetize the magnetic elements, especially under short circuit fault scenarios. For example, a short-circuit in the stator assembly 22 can produce a sudden transient magnetic field that is opposite to the magnetic field of the magnetic elements 40.

To protect the magnetic elements from such a demagnetizing magnetic field, the exemplary magnetic assembly includes an electrically conductive element or electrically conductive rings 42 that circumscribe each of the magnetic elements 40. Each of the electrically conductive rings 42 includes at least one effective turn. The electrically conductive rings 42 may be formed of copper, aluminum, or any combinations thereof or an alloy containing one or more of those elements. The cross-section of the electrically conductive rings 42 may be a circle or a polygon. As illustrated, the electrically conductive rings 42 circumscribe the side surfaces 44, 46, 48 and 50 of the magnetic elements. Thus in the event of a short-circuit, the magnetic field resultantly produced induces current in the electrically conductive rings 42 that, in turn, produce a magnetic field opposite to the magnetic field produced by the short-circuit, reducing the demagnetizing effect of the short-circuit on the magnetic elements 40 thus providing a shielding effect to protect the magnetic element with out increasing the reluctance of the magnetic path. Advantageously, as illustrated, the electrically conductive rings 42 or loops do not extend to cover the top surface 52 of the magnetic elements 40. Accordingly, the electrically conductive rings 42 do not add to the reluctance of the magnetic circuit linking the magnetic elements 40 and the stator windings 28.

Additionally, the magnetic assemblies 20 include a pole-cap 54. The pole-cap 54 may be formed of a ferromagnetic magnetically soft material with preferably low electrical conductivity; e.g., soft-magnetic composite (SMC), a plurality of laminations formed of mild or electrical steel, or any combinations thereof. The pole-cap 54 provides protection against demagnetization partially, i.e. near a top surface 52 of the magnetic elements 40 by providing a high permeance quadrature-axis flux path through the air gap. The pole-cap also distributes the direct-axis demagnetizing flux (i.e., field) uniformly across the magnet surface, thereby attenuating localized demagnetization. The direct axis is defined under conventional electrical machine terminology as the orientation axis on the rotor whereby the magnetic flux from the magnetic elements (i.e., permanent magnets) is aligned. The quadrature axis is located orthogonal (i.e., 90 electrical degrees) from the direct axis. As will be appreciated by those skilled in the art, the pole-cap 54 can increase the stator winding leakage flux, and the resulting synchronous, transient, and sub-transient reactances, which thereby limit the magnitude of the fault currents, and the level of demagnetizing forces. The pole cap 54 may also be formed of solid ferromagnetic steel though with the drawback of higher electrical losses (and lower generator efficiency and increased heating) due to induced eddy current in the pole cap steel especially during rated and partial load operation. An optional back plate 56 formed of a magnetically soft material such as solid mild steel is provided to add structural integrity to the magnet assembly.

The magnetic elements 40, the electrically conductive rings 42, the pole-cap 54, and the back plate 56 may be coupled using resin. In some embodiments, the magnetic assembly 20 may include a plurality of magnetic elements 40 each surrounded by one electrically conductive ring 42. While in other embodiments, the magnetic assembly 20 may include one or more magnetic elements 40 all surrounded by one electrically conductive ring 40.

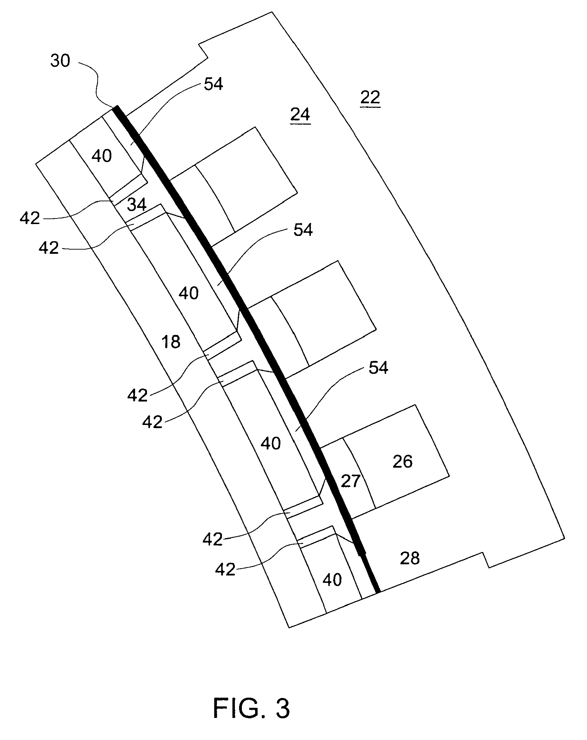

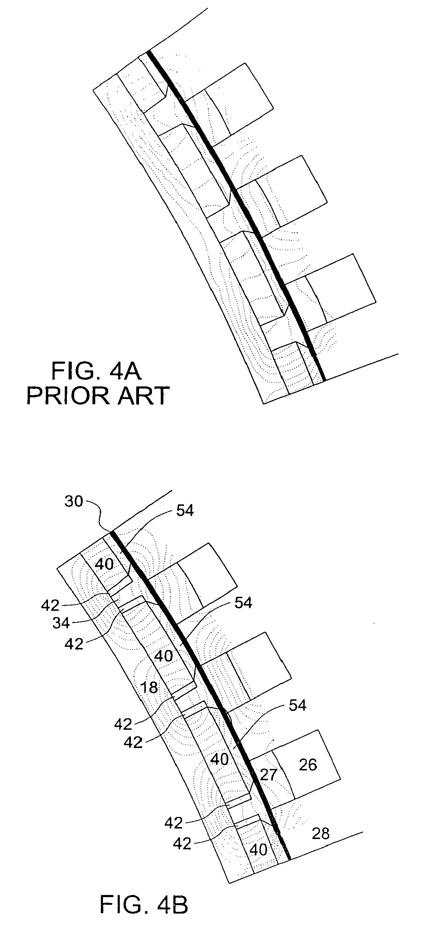

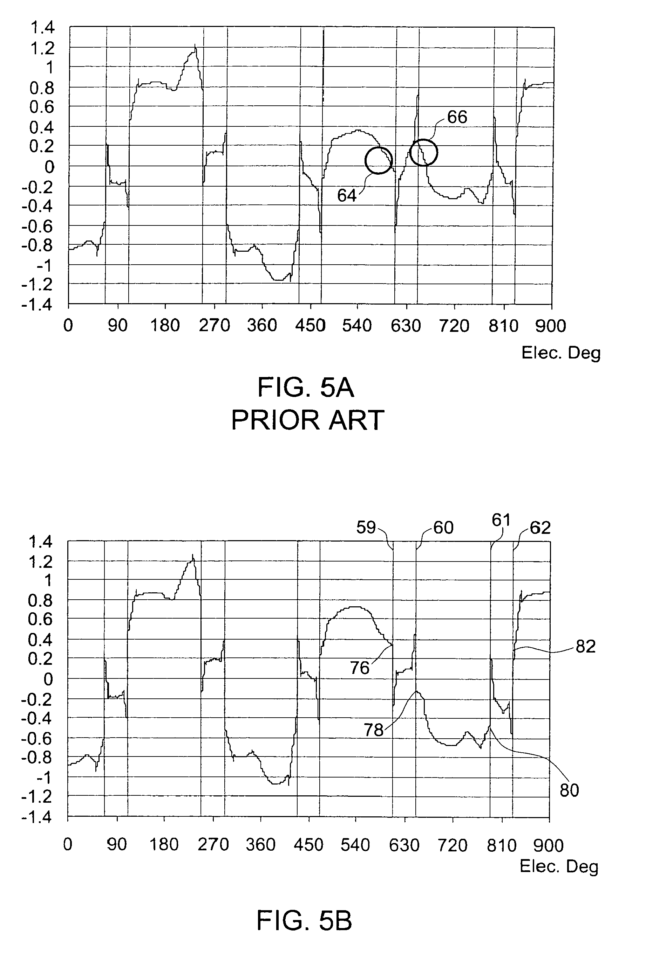

FIG. 3 is a partial sectional view of an electrical machine having a stator and rotor. The rotor core 18 is coupled to magnetic elements 40 along with pole-caps 54. Air gap 30 separates the stator 22 from the magnetic elements 40. In FIG. 3 the magnetic assembly 20 contains one electrically conductive ring which surrounds all magnetic elements 40. Stator yoke 24, slot 26, slot wedge 27 and stator tooth 28 are also shown in FIG. 3. The demagnetization effects at the instant of time of peak short circuit current and comparisons of the present exemplary embodiments with the prior art are described in further detail below with reference to FIG. 4A, FIG. 4B, FIG. 5A and FIG. 5B.

FIG. 4A is a three pole flux diagram indicating a manner in which the flux lines are distributed at the instant of peak short circuit current in the vicinity of the air gap for a magnet assembly as implemented in prior art not containing a single or multiple conductive rings 42. In traditional assemblies, the side surfaces of the magnet elements 40, as illustrated in FIG. 4, are not circumscribed by any electrically conductive material but instead surrounded by air or by non-electrically conductive materials. During a sudden short circuit condition, the magnetic elements 40 in such an assembly have reduced radial components of the magnetic flux. As a result, the magnets are susceptible to demagnetizing effect, especially near the edges.

FIG. 4B is a three pole flux diagram indicating a manner in which the flux lines are distributed at the instant of peak short circuit current in the vicinity of the air gap in magnetic elements 40 according to an exemplary embodiment of the invention. In such an embodiment, the side surfaces of the magnetic elements 40 are circumscribed by a conductor ring 42. Thus, as shown in the FIG. 4B, the high density of flux lines and the radial orientation of these flux lines indicate the presence of strong magnetic fields produced by the magnet elements. The presence of the magnetic fields ensures that the demagnetization effects due to the sudden fault condition are substantially reduced. The associated waveform plots of the radial (the direction of intended magnetization for this example) flux density shown in FIG. 5A and FIG. 5B quantify the improvements in protection from demagnetization.

FIG. 5A is a graph illustrating the radial component of the magnet flux density along the surface of the magnets, with the three pole flux diagram in FIG. 4A commencing at 360 electrical degrees. The X-axis represents the circumferential distance in electrical degrees and the Y-axis represents the flux density in Tesla. The vertical lines represent the edges of the magnet assembly implemented in the prior art. The area of the magnet that is potentially irreversibly demagnetized is indicated by regions 64 and 66, where the flux density approaches zero or even reversed polarities. As is seen in FIG. 5A, a large portion of the magnet is exposed to irreversible demagnetization effects due to a sudden fault or short circuit condition in the electrical machine. The actual amount of irreversible demagnetization of the magnet will be dependent upon the specific magnet material chosen. In general, magnet material with high intrinsic coercivity is more resistant to irreversibly demagnetization, but also have lower energy product or higher cost.

FIG. 5B is a graph illustrating the radial component of the magnetic flux density along the surface of the magnets with the three pole flux diagram in FIG. 4B commencing at 360 electrical degrees, in accordance with one embodiment of the present invention. The X-axis again represents the circumferential distance in electrical degrees and the Y-axis represents the flux density in Tesla. The peak points 76, 78, 80 and 82 represent the magnetic flux density at the edges 59, 60, 61 and 62 of the magnetic pole respectively. As is seen in FIG. 5B, the area of the magnet exposed to the irreversible demagnetization effect is greatly reduced, if not eliminated, due to the counter flux introduced by the conductive ring disposed around the magnet assembly.

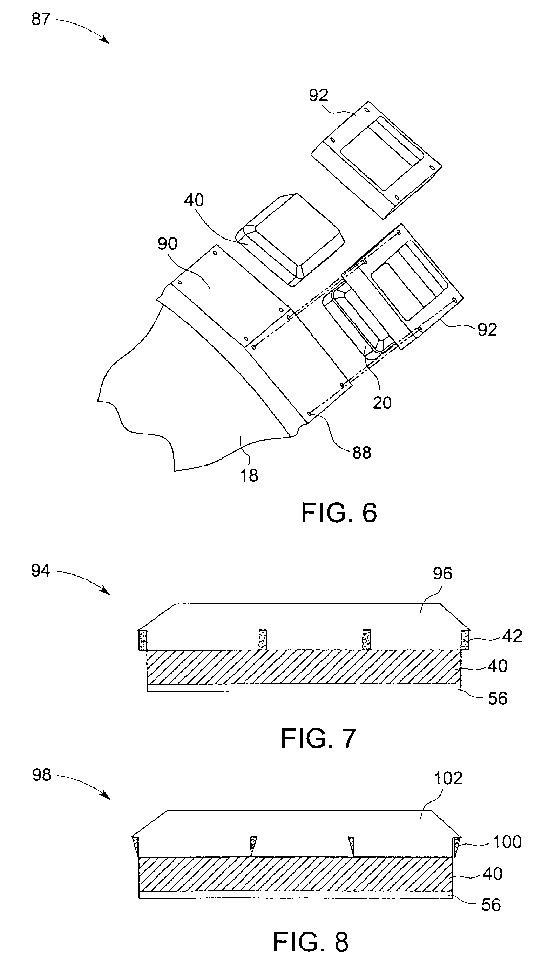

FIG. 6 is a partial, perspective view of another rotor assembly 87, similar to the rotor assembly 14 for an electrical machine, in accordance with an exemplary embodiment of the present technique. As described above, the rotor assembly 87 includes a rotor core 18 and a plurality of magnetic assemblies 20. The magnetic assemblies 20 include several magnetic elements 40. The rotor core 18 also includes a plurality of tapped holes 88 on its peripheral surface 90. In the exemplary embodiment, the plurality of magnetic assemblies 20 is assembled to the rotor core 18 using frames 92 and fasteners. The frames are preferably a non-ferromagnetic, conductive material such as silver, aluminum, copper, or brass, or an alloy thereof. The frames perform the function of the conductive rings 42 described in FIG. 3 above.

FIG. 7 is a front cross-section of a magnetic assembly 94, similar to the magnetic assembly 20 but with electrically conductive rings imbedded inside a pole-cap, in accordance with an embodiment of the present technique. The magnetic assembly 94 includes magnetic element 40. The electrically conductive rings 42 are imbedded inside a pole-cap 96. The pole-cap 96 is made of a soft magnetic composite (SMC), powder metal material. The pole-cap material along with the electrically conductive rings 42 is compressed to form the pole-cap 96 imbedded with the electrically conductive rings 42. The magnetic assembly also includes a back plate 56. The pole cap may also be comprised of a laminated steel stack, in which case, slots for the conductive rings are punched into the pole cap laminations prior to assembly.

FIG. 8 is a front cross-section of another magnetic assembly 98 with electrically conductive rings imbedded inside a pole-cap, in accordance with an embodiment of the present technique. In the exemplary embodiment, the magnetic assembly 98 includes electrically conductive rings 100 with triangular cross-section. The pole-cap material (SMC or powder metal) along with the electrically conductive rings 100 having triangular cross-section is compressed to form the pole-cap 102 imbedded with the electrically conductive rings 100. As will be appreciated by those skilled in the art, electrically conductive rings 100 with triangular cross-section offer low blockage to the magnetic flux of the magnetic element 40 due to small footprint. The magnetic assembly 98 also includes the magnetic element 40 and a back plate 56.

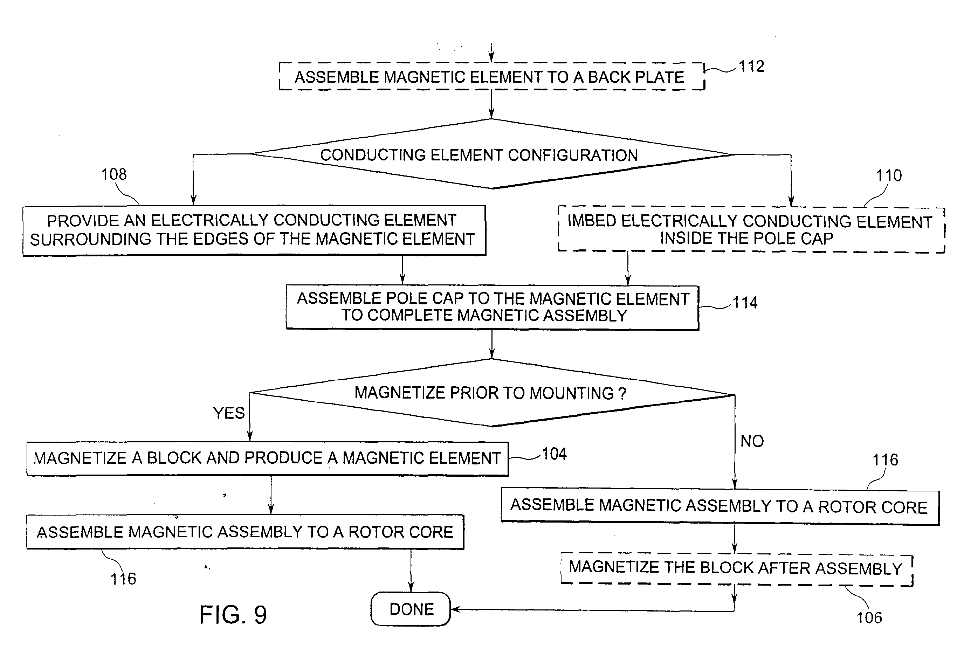

FIG. 9 is a flowchart illustrating an exemplary method of manufacturing of a rotor assembly for an electrical machine, in accordance with aspects of present technique. The method includes magnetizing a block having a top and bottom surfaces to produce a magnetic element, as in step 104. As will be appreciated by those skilled in the art, the block may also be coupled to the rotor core and then magnetized, as in step 106. An electrically conductive ring having at least one effective loop is disposed surrounding the edges of the magnetic element, as in step 108. Alternatively an electrically conductive ring having a rectangular or triangular cross section may be imbedded inside a pole-cap, as in step 110. The magnetic element may then be coupled to a back plate, as in step 112. A pole-cap is then coupled to the top surface of the magnetic element to produce a magnetic assembly, as in step 114. The magnetic assembly is coupled to the rotor core by using a non-magnetic wedge of FIG. 1 or using a frame of FIG. 6, as in step 116.

While only certain features of various embodiments and aspects of the invention have been illustrated and described herein, many modifications and changes will occur to those skilled in the art. It is, therefore, to be understood that the appended claims are intended to cover all such modifications and changes as fall within the true spirit of the invention. It should be apparent to one skilled in the art that the invention though illustrated for radial-flux machine embodiments is equally applicable to axial-flux machines.

### ELEMENT LIST

- 14.: Rotor assembly.
- 18.: Rotor core
- 19.: Rotor Frame
- 20.: Magnetic assembly.
- 22.: Stator core
- 24.: Stator Yoke
- 26.: Slot
- 27.: Slot Wedge
- 28.: Stator tooth
- 28.: Stator windings.
- 30.: Air gap.
- 32.: Outer surface of rotor core.
- 34.: Wedge.
- 36.: Tapped holes in the wedge.
- 38.: Tapped hole in the rotor core.
- 40.: Magnetic element.
- 42.: Conductive ring.
- 44.: Side surface of magnetic element.
- 46.: Side surface of magnetic element.
- 48.: Side surface of magnetic element.
- 50.: Side surface of magnetic element.
- 52.: Top surface of magnetic element.
- 54.: Pole-cap.
- 56.: Back plate.
- 58.: Magnetic flux lines.
- 59.: Edge of magnetic assembly.
- 60.: Edge of magnetic assembly.
- 61.: Edge of magnetic assembly.
- 62.: Edge of magnetic assembly.
- 64.: Region
- 66.: Region
- 76.: Peak. (Magnetic flux density at 59).
- 78.: Peak. (Magnetic flux density at 60).
- 80.: Peak. (Magnetic flux density at 61).
- 82.: Peak. (Magnetic flux density at 62).
- 87.: Rotor assembly.
- 88.: Tapped hole in the rotor core.
- 90.: Top surface of the rotor core.
- 92.: Frame.
- 94.: Magnetic assembly.
- 96.: Pole-cap.
- 98.: Magnetic assembly.
- 100.: Electrically conducting element
- 102.: Pole-cap.
- 104.: Magnetize a block and produce a permanent magnet.
- 106.: Magnetize a block after assembly.
- 108.: Provide an electrically conductive ring surrounding the edges of the magnetic element.
- 110.: Imbed electrically conductive ring inside the pole-cap.
- 112.: Assemble magnetic element to a back plate.
- 114.: Assembly pole-cap to the magnetic element to complete the magnetic assembly.
- 116.: Assemble the magnetic assembly to rotor core.

## Claims

1. A magnetic assembly (20) for an electrical machine having a rotor core, comprising:
a magnetic element (40) having a top surface, a bottom surface and at least one side surface located between the top and bottom surfaces, wherein the bottom surface of the magnetic element is couplable to a peripheral surface of the rotor core;
a ferromagnetic layer disposed on the top surface of the magnetic element; and
an electrically conductive element (42) circumscribing the magnetic element.

2. The magnetic assembly of claim 1, wherein the electrically conductive element comprises a frame structure (92) that is configured to secure the magnetic assembly to the rotor core.

3. A magnetic assembly for an electrical machine having a rotor core, the magnetic assembly comprising:
a magnetic element having a top surface (52), a bottom surface and at least one side surface (44), wherein the magnetic element is securable to the rotor core such that the bottom surface is closer to the rotor core than the top surface;
a ferromagnetic layer disposed above radially outboard of the top surface with respect to the rotor core; and
an electrically conductive element disposed between the bottom surface and the ferromagnetic layer.

4. The magnetic assembly of claim 3, wherein the electrically conductive element comprises a loop.

5. The magnetic assembly of claim 3 or claim 4, wherein electrically conductive element is imbedded inside a pole cap (96).

6. A rotor assembly (14) for an electrical machine, the rotor assembly comprising:
a rotor core (18) configured for rotation relative to a stator assembly of the electrical machine; and
a magnetic assembly comprising:
a magnetic element having a top surface and a bottom surface, wherein the bottom surface is closer to the rotor core than the top surface;
a ferromagnetic layer disposed outboard of the top surface with respect to the rotor core and rotational with the rotor core; and
an electrically conductive element circumscribing the magnetic element.

7. The rotor assembly of claim 6, wherein the electrically conductive element is imbedded inside a pole cap.

8. The rotor assembly of claim 6 or claim 7, comprising a frame that circumscribes the magnetic element and the ferromagnetic layer to secure the magnetic element and the ferromagnetic layer to the rotor core.

9. A method of manufacturing a magnetic assembly for a rotor assembly of an electrical machine, the method comprising:
providing a magnetic element having a top surface, a bottom surface and at least one side surface extending between the top and bottom surfaces; disposing a ferromagnetic layer over the top surface of the magnetic element; and
disposing an electrically conductive loop around the magnetic element between the ferromagnetic layer and the bottom surface.

10. The method of claim 9, comprising providing a plurality of magnetic elements, each magnetic element having an electrically conductive loop circumscribing the at least one side surface thereof.
